# EUROPÄISCHE PATENTANMELDUNG

(11) **EP 2 814 169 A1**
(43) Veröffentlichungstag der Anmeldung: **17.12.2014**
(21) Anmeldenummer: 13171678.9
(22) Anmeldetag: 12.06.2013
(51) Int. Cl.: H02P 9/10, H02J 3/24

(54) **Verfahren zum Betrieb einer Synchronmaschine**

(71) Anmelder: Siemens Aktiengesellschaft, 80333 München (DE)
(72) Erfinder: Klocke, Meinolf, Dr., 58452 Witten (DE); Thien, Dagmar, Dr., 46045 Oberhausen (DE)

(57) **Zusammenfassung**

Die Erfindung betrifft ein Verfahren zum Betrieb einer Synchronmaschine, die einen Läufer mit einer Erregerwicklung aufweist, indem ein Polradwinkel bestimmt wird und die Synchronmaschine bei einem gewünschten Polradwinkel oder in einem gewünschten Polradwinkelbereich betrieben wird, so dass mechanische Schwingungen, insbesondere Ständerwickelkopfschwingungen reduziert werden.

## Beschreibung

Die Erfindung betrifft ein Verfahren zum Betrieb einer Synchronmaschine.

Aus dem Stand der Technik ist bekannt (IEEE Transactions on Power Apparatus and Systems, Vol. PAS-102, No. 5, May 1983, "End-Winding Vibrations in large Synchronous Generators") dass die Betriebssituation einer Synchronmaschine auch die Entstehung mechanischer Schwingungen, insbesondere Ständerwickelkopfschwingungen, beeinflussen kann. Dennoch treten bisweilen weiterhin Ständerwickelkopfschwingungen auf.

Aufgabe der Erfindung ist hierzu eine Verbesserung zu schaffen.

Die Lösung dieser Aufgabe findet sich insbesondere in den unabhängigen Ansprüchen. Die abhängigen Ansprüche geben vorteilhafte Weiterentwicklungen an. Weitere Einzelheiten und Erläuterungen der Lösung finden sich in der Beschreibung samt der zugehörigen Zeichnung.

Es wurde erkannt, dass ein Verfahren zum Betrieb einer Synchronmaschine, die einen Läufer mit einer Erregerwicklung aufweist, bereitzustellen ist. Hierzu ist ein Polradwinkel zu bestimmen und die Synchronmaschine bei einem gewünschten Polradwinkel oder in einem gewünschten Polradwinkelbereich zu betreiben. Soweit hier von einem Polradwinkel gesprochen wird, ist ein äußerer Polradwinkel gemeint. Bei diesem äußeren Polradwinkel handelt es sich um die Phasendifferenz einer Klemmenspannung, also der an den Generatorklemmen abgegriffenen Spannung, und der sogenannten Polradspannung. Die Polradspannung ergibt sich aus der momentanen Drehlage des Läufers und der Lage und der Erregung der Magnete am Läufer. Dabei kann es sich theoretisch um Permanentmagnete handeln. Im Allgemeinen ist aber eine Erregerwicklung, es können auch mehrere sein, vorhanden, durch die zur Erregung des Magnetfelds ein Gleichstrom fließt. Zur Ermittlung der Polradspannung ist es also nicht ausreichend allein die mechanische Lage des Läufers zu kennen. Es ist auch eine Information über das erzeugte Magnetfeld erforderlich. Es ist mithin entscheidend sowohl die Polradspannung als auch die Klemmenspannung in irgendeiner Weise zu kennen. Damit ist der Polradwinkel bestimmbar und es ist möglich die Synchronmaschine in einem gewünschten Polradwinkelbereich oder mit einem gewünschten Polradwinkel zu betreiben, so dass mechanische Schwingungen, insbesondere Ständerwickelkopfschwingungen reduziert werden. Am besten ist freilich nicht nur eine Reduktion sondern sogar eine weitgehende Vermeidung dieser Schwingungen zu erreichen. Neben Ständerwickelkopfschwingungen sind etwa auch Wellenschwingungen denkbar

Wie eingangs erläutert, ist aus dem Stand der Technik bekannt dass die Betriebssituation der Synchronmaschine auch die Entstehung mechanischer Schwingungen, insbesondere Ständerwickelkopfschwingungen, beeinflussen kann. Es war bisher nicht bekannt, dass durch eine geeignete Wahl des Polradwinkels die entsprechenden Schwingungen reduziert werden. Möglich ist hierbei auch, dass die Synchronmaschine bei unerwünschten Polradwinkeln nur kurzzeitig betrieben wird, etwa wenn dieser Betrieb kurzzeitig unvermeidbar ist, wie dies bei Leistungserhöhungen oder Leistungssenkungen der Fall sein kann.

In einer Ausführungsform der Erfindung wird hierzu erfasst, bei welchen Polradwinkeln hohe mechanische Schwingungen auftreten. Daraus ist bekannt, welche Polradwinkel beim Betrieb der Synchronmaschine möglichst zu vermeiden sind. Besonderes Augenmerk gilt hierbei wiederum den Ständerwickelkopfschwingungen. Es ist auch denkbar, derartige Messungen nur bei Inbetriebnahme oder in regelmäßigen Abständen durchzuführen und dann die Polradwinkel, deren Vermeidung als wünschenswert identifiziert worden ist, zu vermeiden.

Dabei ist darzustellen, dass bislang Ständerwickelkopfschwingungen lediglich als Trendaufzeichnung durchgeführt werden. Dabei sind mitunter Alarmschwellen vorgesehen. Ständerwickelkopfschwingungen benötigen typischerweise etwa eine Stunde stabilen Betriebs um sich einzuschwingen.

Dieses Verfahren eignet sich vor allem für Innenpolmaschinen, bei denen sich die Erregerwicklung im Läufer befindet.

Eine Möglichkeit zur Erfassung des Polradwinkels ist es einen magnetischen Fluss, der vom Läufer verursacht wird zu erfassen und auszuwerten und mit einem Spannungsverlauf eines Stromnetzes, in das die Synchronmaschine Strom einspeist, zu vergleichen. Damit kann in einfacher Weise die Phasenlage der Polradspannung erfasst werden. Wie dargelegt wird durch den Vergleich mit einem Spannungsverlauf des Stromnetzes der Polradwinkel bestimmt.

In einer Ausführungsform der Erfindung wird der Spannungsverlauf des Stromnetzes durch eine Spannungsmessung an Klemmen der Synchronmaschine bestimmt. Abgesehen von möglichen Phasenverschiebungen etwa in einem Transformator gibt der Spannungsverlauf an den Klemmen der Synchronmaschine, das heißt an den Generatorklemmen, den Spannungsverlauf des Stromnetzes wieder. Bei den in Europa verbreiteten dreiphasigen Netzen sind drei Klemmen vorhanden, an denen die Spannung abzugreifen ist. Die Erfindung ist aber nicht auf dreiphasige Netze beschränkt. Beispielsweise für zweiphasige Netze ist die Erfindung ebenso einsetzbar.

In einer Ausführungsform der Erfindung wird der magnetische Fluss durch Messungen der Spannung einer Sonde erfasst. Hierbei kann insbesondere eine Induktionsspule als Sonde dienen. Es können auch aufwändigere Sonden, wie etwa Hallsonden eingesetzt werden. Im Regelfall genügt eine einzelne Sonde. Es ist aber nicht auszuschließen, dass durch eine Mehrzahl von Sonden eine Verbesserung des Messergebnisses erzielbar ist.

In einer Ausführungsform der Erfindung wird der magnetische Fluss in einen Luftspalt zwischen dem Läufer und einem Stator erfasst. Zum einen ist das Feld in diesem Luftspalt, also das Luftspaltfeld, ein sehr geeignetes Maß für den vorliegend interessierenden magnetischen Fluss. Zum anderen ist eine Messung im Luftspalt gut möglich, da dort eine Sonde angeordnet werden kann.

An dieser Stelle soll erwähnt werden, dass sich die Erfindung für Synchronmaschinen beliebiger Leistung eignet. Ein besonderer Nutzen ist bei Leistungen von mehreren 100 MW zu erwarten. Für die vorgenannte Ausführungsform, bei der im Luftspalt gemessen wird, muss freilich der Luftspalt groß genug sein, so dass sehr kleine Leistungen ausscheiden können.

In einer Ausführungsform der Erfindung werden bei der Auswertung des magnetischen Flusses durch eine Signalauswertung, insbesondere durch eine Fourier-Transformation, höherfrequente Komponenten berücksichtigt. Dabei handelt es sich im Regelfall um Frequenzen bis 4 kHz. Es sind gerade die höherfrequenten Komponenten, welche sich zur Lagebestimmung des Läufers eignen. Die Auswertung der höherfrequenten Komponenten bewirkt eine Unabhängigkeit von der Phasenlage der Grundschwingung, die das gesamte Luftspaltfeld repräsentiert und neben dem Feldbeitrag des Läufers auch den des Ständers enthält und somit für eine Lageidentifizierung des Läufers schlechter geeignet ist. Daher ist es im Allgemeinen erforderlich, eben jene höherfrequenten Komponenten zu berücksichtigen. Um diese aus dem gesamten Signal herauszufiltern, ist eine Signalauswertung erforderlich. Hierfür dient insbesondere eine Fourier-Transformation.

Zusätzlich zu den oben genannten Maßnahmen ist es möglich, dass eine Bestimmung einer mechanischen Drehlage des Läufers in allgemeiner Weise erfolgt. Hierfür könnte etwa die Lage von Kennzeichnungen auf dem Läufer bestimmt werden. So wären Kennzeichnungen denkbar, deren Lage mit einem Laser abgetastet wird. Ferner können auch Informationen über die Erregerspannung der Erregerwicklungen zur Bestimmung der Polradspannung beitragen. Es mag denkbar sein, auch allein aus den vorgenannten Maßnahmen heraus die Phasenlage der Polradspannung zu bestimmen. Aus bisheriger Sicht erscheint aber die oben beschriebene Bestimmung des magnetischen Flusses geeigneter zu sein.

Eine weitere Ausführungsform der Erfindung sieht vor, die Synchronmaschine bei einem gewünschten Polradwinkel oder in einem gewünschten Polradwinkelbereich zu betreiben, so dass eine Synchronsierung zu einem Stromnetz, in das von der Synchronmaschine Strom eingespeist wird, vorhanden bleibt. Damit können insbesondere Netzpendelungen, also Schwankungen der Netzfrequenz des Stromnetzes, berücksichtigt werden. Bei Netzpendelungen besteht die Gefahr eines Außertrittfalls.

Unter einem Außertrittfall ist zu verstehen, dass die Synchronmaschine ihre Synchronisierung zum Stromnetz verliert, in das die Synchronmaschine Netz einspeisen soll. Der Generator kann dabei die mechanische Leistung nicht mehr in elektrische Leistung umwandeln. Damit kann eine Beschleunigung über die Bemessungsdrehzahl hinaus erfolgen. Dies kann ohne Abschaltung zu einer Beschädigung oder Zerstörung der Synchronmaschine führen. Darüber hinaus kann unter Umständen die zur Einspeisung fehlende elektrische Leistung zu weiteren Stabilitätsproblemen im Stromnetz führen.

Bei stabiler Netzfrequenz genügt es im Allgemeinen die Frequenz der Synchronmaschine und der die Synchronmaschine antreibenden Turbine entsprechend konstant zu halten. Im Falle der beschriebenen Netzpendelungen ist aber im Interesse eines stabilen Betriebs und einer stabilen Einspeisung eine Beibehaltung des gewünschten Polradwinkels von Bedeutung und führt zu einer Verbesserung von Betriebsstabilität und Einspeisung.

Das hier beschriebene Verfahren zum Außertrittfallschutz kann zusätzlich zu im Stand der Technik bekannten Maßnahmen als redundantes Verfahren eingesetzt werden. Es könnten aber unter Umständen auch die bekannten Maßnahmen ersetzt werden.

Ein Polradwinkel von 90°, also ein Vorauseilen der Polradspannung gegenüber der Klemmenspannung um 90° darf nicht überschritten werden, da ansonsten der eingangs beschriebene Außertrittfall eintritt. Um dies sicher zu vermeiden ist es sinnvoll, den Polradwinkel kleiner als 90° zu wählen, um eine Überschreitung sicher zu vermeiden. Übliche Werte liegen im Bereich von etwa 30° bis etwa 40°.

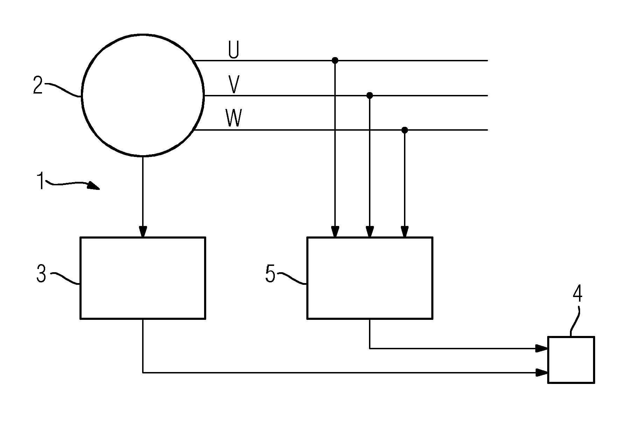

Weitere Einzelheiten gehen aus der beigefügten Figur 1 hervor. Zu erkennen ist eine schematische Skizze der Messanordnung 1. Es ist der dreiphasige Generator 2 zu erkennen. Dort wird die Spannung an den Klemmen U, V, W abgegeben und ins Netz eingespeist. Der Generator 2 umgibt den Läufer mit den Erregerwicklungen. Die mit einer im Luftspalt befindlichen Induktionsspule ermittelte Sondenspannung wird an die Signalaufbereitungseinheit 3 übergeben. Dort wird mit Hilfe einer Fourier-Transformation eine Signalanalyse vorgenommen. Daraus wird ein elektrisch wirksamer Läuferlagewinkel bestimmt, der wie dargelegt nicht allein die mechanische Läuferlage angibt sondern auch die Erregung berücksichtigt. Dieser elektrisch wirksame Läuferlagewinkel wird an die Vergleichseinheit 4 übergeben. Die Vergleichseinheit 4 erhält aus der Auswerteeinheit 5, in der das Mitsystem der Generatorspannung an den Klemmen U, V und W ermittelt wird, die Momentanphase des Mitsystems. In der Vergleichseinheit 4 wird der elektrisch wirksame Läuferlagewinkel und die Momentanphase des Mitsystems verglichen und daraus der Polradwinkel bestimmt. Wie weiter oben bereits dargelegt, handelt es sich genau genommen um den äußeren Polradwinkel. Wie dargelegt, wird der so bestimmte Polradwinkel nun für die Steuerung der Synchronmaschine dahingehend genutzt, dass die Synchronmaschine bei einem gewünschten Polradwinkel betrieben wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb einer Synchronmaschine, die einen Läufer mit einer Erregerwicklung aufweist, indem ein Polradwinkel bestimmt wird und die Synchronmaschine bei einem gewünschten Polradwinkel oder in einem gewünschten Polradwinkelbereich betrieben wird, so dass mechanische Schwingungen, insbesondere Ständerwickelkopfschwingungen reduziert werden.

2. Verfahren nach Anspruch 1,
**dadurch gekennzeichnet, dass**
mechanische Schwingungen und Polradwinkel erfasst werden und bestimmt wird, bei welchen Polradwinkeln hohe mechanische Schwingungen auftreten.

3. Verfahren nach einem der vorhergehenden Ansprüche,
**dadurch gekennzeichnet, dass**
zur Erfassung des Polradwinkels ein magnetischer Fluss, der vom Läufer verursacht wird, erfasst und ausgewertet wird und mit einem Spannungsverlauf eines Stromnetzes, in das die Synchronmaschine Strom einspeist, verglichen wird.

4. Verfahren nach Anspruch 3,
**dadurch gekennzeichnet, dass**
der Spannungsverlauf des Stromnetzes durch eine Spannungsmessung an Klemmen (U, V, W) der Synchronmaschine bestimmt wird.

5. Verfahren nach einem der Ansprüche 3 bis 4,
**dadurch gekennzeichnet, dass**
der magnetische Fluss durch Messung der Spannung einer Sonde, insbesondere einer als Sonde dienenden Induktionsspule und/oder einer Hallsonde, erfasst wird.

6. Verfahren nach einem der Ansprüche 3 bis 5,
**dadurch gekennzeichnet, dass**
der magnetische Fluss in einem Luftspalt zwischen dem Läufer und einem Stator erfasst wird.

7. Verfahren nach einem der Ansprüche 3 bis 6,
**dadurch gekennzeichnet, dass**
bei der Auswertung des magnetischen Flusses durch eine Signalauswertung (3), insbesondere durch eine Fouriertransformation, höherfrequente Komponenten berücksichtigt werden.

8. Verfahren nach einem der vorhergehenden Ansprüche,
**dadurch gekennzeichnet, dass**
eine Bestimmung einer mechanischen Drehlage des Läufers und/oder einer Erregerspannung der Erregerwicklung erfolgt.

9. Verfahren nach einem der vorhergehenden Ansprüche,
**dadurch gekennzeichnet, dass**
eine Synchronsierung zu einem Stromnetz, in das von der Synchronmaschine Strom eingespeist wird, vorhanden bleibt.

10. Verfahren nach Anspruch 9,
**dadurch gekennzeichnet, dass**
ein Polradwinkel kleiner 90°, insbesondere etwa 30° bis etwa 40°, gewählt wird.
